# EUROPEAN PATENT APPLICATION

(11) **EP 4 626 026 A1**
(43) Date of publication of application: **01.10.2025**
(21) Application number: 23893303.0
(22) Date of filing: 22.08.2023
(51) Int. Cl.: H04R 3/00, G06F 3/16

(54) **AUDIO PLAYBACK METHOD AND SYSTEM, ELECTRONIC DEVICE, AND COMPUTER READABLE MEDIUM**

(30) Priority: 21.11.2022 CN 202211463750
(71) Applicant: ZTE CORPORATION, Shenzhen, Guangdong 518057 (CN)
(72) Inventor: XU, Mei, Shenzhen, Guangdong 518057 (CN)
(74) Representative: Chimini, Francesco
(86) International application number: PCT/CN2023/114297
(87) International publication number: WO 2024/109209

(57) **Abstract**

An audio playback method and system, an electronic device and a computer readable medium. The audio playback method includes: determining the type of an audio to be played back (100); and determining, according to the type of the audio to be played back, a target playback output device or a target playback output device combination in a multi-playback output system for playing the audio to be played back (101).

## Description

### Cross-Reference to Related Application

The present invention is based on Chinese patent application No. 202211463750.3 filed on November 21, 2022 and entitled "Audio Playback Method and System, Electronic Device, and Computer Readable Medium", and claims the priority to the invention, which is incorporated in its entirety herein by reference.

### Technical Field

Embodiments of the present invention relate to the technical field of communications and in particular, to an audio playback method and system, an electronic device, and a computer readable medium.

### Background

Smart homes are becoming more and more popular. Currently, control over devices within a smart home is not sufficiently humanized and detailed, leading to low user experience.

### Summary

Embodiments of the present invention provide an audio playback method and system, an electronic device, and a computer readable medium.

According to a first aspect, embodiments of the present invention provide an audio playback method, the method including: the type of an audio to be played back is determined; and a target playback output device or a target playback output device combination in a multi-playback output system for playing the audio to be played back is determined according to the type of the audio to be played back.

According to a second aspect, embodiments of the present invention provide an electronic device, including: at least one processor; and a memory, the memory storing at least one program, which when executed by the at least one processor, implements any one of the audio playback method as described above.

According to a third aspect, embodiments of the present invention provide a computer readable medium, the computer readable medium storing a computer program, which when executed by a processor, implements any one of the audio playback method as described above.

According to a fourth aspect, embodiments of the present invention provide an audio playback system, including: a terminal, configured to determine the type of an audio to be played back; to determine, according to the type of the audio to be played back, a target playback output device or a target playback output device combination in a multi-playback output system for playing the audio to be played back; and to send the audio to be played back to the target playback output device or the target playback output device combination by a communication channel between the terminal and the target playback output device or the target playback output device combination, so as to play, by the target playback output device or the target playback output device combination, the audio to be played back; and playback output devices in the multi-playback output system, each of the playback output devices being configured to receive, by a communication channel between the playback output device and the terminal, the audio to be played back which is sent by the terminal, and to play the audio to be played back.

### Brief Description of the Drawings

Fig. 1 is a flowchart of an audio playback method provided according to embodiments of the present invention;
Fig. 2 is a flowchart of an audio playback method provided according to Example 1 of embodiments of the present invention;
Fig. 3 is a flowchart of an audio playback method provided according to Example 2 of embodiments of the present invention;
Fig. 4 is a block diagram of composition of an electronic device provided according to some other embodiments of the present invention; and
Fig. 5 is a block diagram of composition of an audio playback system provided according to some other embodiments of the present invention.

### Detailed Description of the Embodiments

To make a person skilled in the art better understand the technical solutions of the present invention, hereinafter, an audio playback method and system, an electronic device, and a computer readable medium provided in the present invention are described in detail with reference to the accompanying drawings.

Hereinafter, exemplary embodiments will be described sufficiency with reference to the accompanying drawings, but the exemplary embodiments may be embodied in different forms and should not be construed as limited to the embodiments set forth herein. Rather, the purpose of providing these embodiments is to make the present invention thorough and complete, and to make a person skilled in the art sufficiently understand the scope of the present invention.

Embodiments and features in the embodiments in the present invention may be combined with one another without conflicts.

As used herein, the term "and/or" includes any and all combinations of at least one of associated listed items.

The terms used herein are for the purpose of describing particular embodiments only, and are not intended to limit the present invention. As used herein, the singular forms "a/an" and "the" are intended to include the plural forms as well, unless the context clearly indicates otherwise. It will be further understood that the terms "includes" and/or "made of ..." when used in this description, specify the presence of stated features, integers, steps, operations, elements, and/or components, but do not preclude the presence or addition of at least one other feature, integer, step, operation, element, component, and/or group thereof.

Unless otherwise defined, all terms (including technical terms and scientific terms) used herein have the same meanings usually understood by a person of ordinary skill in the art. It will also be understood that terms, such as those defined in commonly used dictionaries, should be interpreted as having meanings consistent with their meanings in the context of the related art and the present invention, and will not be interpreted in an idealized or overly formal sense, unless clearly defined in the present invention.

Taking a smart cockpit as an example, in a case that the smart cockpit is configured with a loudspeaker system including two or more loudspeaker devices, the cockpit environment can be considered as multi-playback output. At present, there is no solution for a loudspeaker system in a smart cockpit.

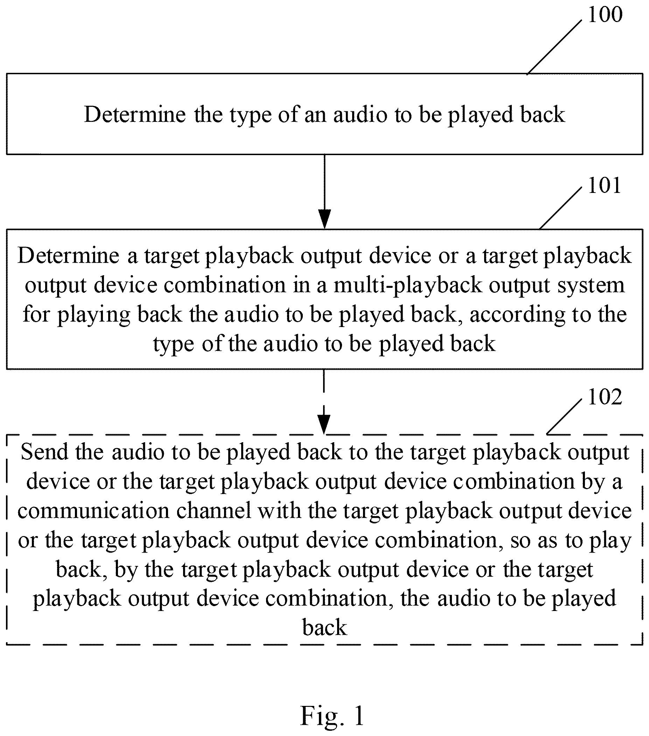

Fig. 1 is a flowchart of an audio playback method provided according to embodiments of the present invention.

In a first aspect, with reference to Fig. 1, an embodiment of the present invention provides an audio playback method, which is applied to a mobile terminal. The method includes:
Step 100. The type of an audio to be played back is determined.

In an embodiment, as a call audio has the highest priority, the type of the audio to be played back is classified into a call audio type and other audio types.

In an embodiment, the type of the audio to be played back includes at least one of: a normal call audio type, a non-call audio type, a conference audio type, a network call audio type, an entertainment application audio type and an educational application audio type.

In an embodiment, the non-call audio type refers to other audio types except the normal call audio type and the network call audio type.

In an embodiment, the type of the audio to be played back can be determined according to an application program for playing the audio to be played back. For example, in a case that the application program for playing the audio to be played back is a call application program, it is determined that the type of the audio to be played back is a normal call audio type; in a case that the application program for playing the audio to be played back is not a call application program, it is determined that the type of the audio to be played back is a non-standard call audio type; in a case that the application program for playing the audio to be played back is an entertainment application program, it is determined that the type of the audio to be played back is an entertainment application audio type; in a case that the application program for playing the audio to be played back is an educational application program, it is determined that the type of the audio to be played back is an educational application audio type; in a case that the application program for playing the audio to be played back is a conference application program, it is determined that the type of the audio to be played back is a conference audio type; and in a case that it is determined that the application program for playing the audio to be played back is an instant-chat application program, it is determined that the type of the audio to be played back is a network call audio type.

Step 101. A target playback output device or a target playback output device combination in a multi-playback output system for playing the audio to be played back is determined according to the type of the audio to be played back.

In an embodiment, the playback output device includes at least one of: a loudspeaker device, an earphone, an augmented reality (AR) device, etc.

In an embodiment, the target playback output device or the target playback output device combination can be determined directly according to the type of the audio to be played back. For example, in a case that the type of the audio to be played back is a non-call audio type, the target playback output device or the target playback output device combination is determined as all playback output devices in the multi-playback output system.

In an embodiment, the target playback output device or the target playback output device combination in the multi-playback output system for playing the audio to be played back is determined according to the type of the audio to be played back, includes: the target playback output device or the target playback output device combination is determined according to the type of the audio to be played back and at least one of: a pre-stored correlation between application program information and area information; the current state of the mobile terminal; and an area where the mobile terminal is located.

In an embodiment, the target playback output device or the target playback output device combination in the multi-playback output system for playing the audio to be played back is determined according to the type of the audio to be played back, includes: according to the type of the audio to be played back and a pre-stored correlation between application program information and area information where a playback output device or a playback output device combination is located, the target playback output device or the target playback output device combination is determined. For example, in a case that the type of the audio to be played back is a non-call audio type, the target playback output device or the target playback output device combination is determined according to the pre-stored correlation.

In an embodiment, the target playback output device or the target playback output device combination is determined according to the pre-stored correlation includes at least one of:
in a case that area information corresponding to application program information corresponding to the audio to be played back is found in the correlation, the target playback output device or the target playback output device combination is determined as a playback output device in an area corresponding to the found area information; and

In a case that area information corresponding to application program information corresponding to the audio to be played back cannot be found in the correlation, the target playback output device or the target playback output device combination is determined as all playback output devices in the multi-playback output system.

In an embodiment, the target playback output device or the target playback output device combination in the multi-playback output system for playing the audio to be played back is determined according to the type of the audio to be played back, includes: according to the type of the audio to be played back, a pre-stored correlation between application program information and area information where a playback output device or a playback output device combination is located, and a current state of a terminal for playing the audio to be played back and an area where the terminal is located, the target playback output device or the target playback output device combination is determined. For example, when area information corresponding to application program information corresponding to the audio to be played back cannot be found in the correlation, and the mobile terminal is in a call state currently, the target playback output device or the target playback output device combination is determined as a playback output device in other areas except the area where the mobile terminal is located in the multi-playback output system.

In an embodiment, the target playback output device or the target playback output device combination in the multi-playback output system for playing the audio to be played back is determined according to the type of the audio to be played back, includes: the target playback output device or the target playback output device combination is determined according to the type of the audio to be played back and a current state of a terminal for playing the audio to be played back.

In an embodiment, the target playback output device or the target playback output device combination in the multi-playback output system for playing the audio to be played back is determined according to the type of the audio to be played back, includes: the target playback output device or the target playback output device combination is determined according to the audio type of the audio to be played back and an area where a terminal for playing the audio to be played back is located. For example, in a case that the type of the audio to be played back is a normal call audio type or a network call audio type, the target playback output device or the target playback output device combination is determined as a playback output device in an area where the mobile terminal is located.

In an embodiment, the target playback output device or the target playback output device combination in the multi-playback output system for playing the audio to be played back is determined according to the type of the audio to be played back, includes: the target playback output device or the target playback output device combination is determined according to the audio type of the audio to be played back, a current state of a terminal for playing the audio to be played back, and an area where the terminal is located. For example, when the type of the audio to be played back is a non-call audio type and the mobile terminal is in a call state currently, the target playback output device or the target playback output device combination is determined as a playback output device in other areas except the area where the mobile terminal is located in the multi-playback output system.

In an embodiment, the correlation is preset by a user, or obtained according to playback habits of the user.

In an embodiment, the current state of the terminal includes at least one of: a call state and a non-call state.

In an embodiment, the call state may be a normal call state or a network call state.

In an embodiment, the multi-playback output system includes a smart cockpit, and the area where the mobile terminal is located includes any one of: a front left cabin, a front right cabin, a rear left cabin, a rear middle cabin, and a rear right cabin.

In an embodiment, the front left cabin may also be referred to as driver's cabin.

In an embodiment, the front right cabin may also be referred to as a front passenger's cabin.

In an embodiment, the rear cabin may also be referred to as a children's cabin.

In an embodiment, the area where the mobile terminal is located may be set as the front left cabin by default.

In an embodiment, the area where the mobile terminal is located may also be manually set by the user as any one of the front right cabin, the rear left cabin, the rear middle cabin, and the rear right cabin.

In an embodiment, the area where the mobile terminal is located includes any one of: a bedroom area, a kitchen area, a bathroom area, a living room area and a dining area.

In an embodiment, after the target playback output device or the target playback output device combination in the multi-playback output system for playing the audio to be played back is determined according to the type of the audio to be played back, the method further includes:
Step 102. The audio to be played back is sent to the target playback output device or the target playback output device combination by a communication channel with the target playback output device or the target playback output device combination, so as to play, by the target playback output device or the target playback output device combination, the audio to be played back.

In an embodiment, the method further includes: an interface of a playback output device distribution diagram is displayed, and an option of selecting a playback output device or a playback output device combination is provided; and audio playback is performed according to the playback output device or the playback output device combination selected by the user.

In an embodiment, the interface of the playback output device distribution diagram may be displayed before the type of the audio to be played back is determined; or the interface of the playback output device distribution diagram may be displayed after the type of the audio to be played back is determined and before the target playback output device or the target playback output device combination is determined; or the interface of the playback output device distribution diagram may be displayed after the target playback output device or the target playback output device combination is determined.

For example, after the target playback output device or the target playback output device combination is determined, a pre-generated display interface of the playback output device distribution diagram is jumped to, and prompt information of whether to manually select a playback output device or a playback output device combination is displayed; in a case that an instruction of confirming manual selection of a playback output device or a playback output device combination is received from the user, the playback output device or the playback output device combination selected by the user is received; and the target playback output device or the target playback output device combination is updated to the playback output device or the playback output device combination selected by the user.

Upon receiving an instruction of canceling the manual selection of a playback output device or a playback output device combination from the user, or when no instruction is received from the user within a preset period of time, the step that the audio to be played back is sent to the target playback output device or the target playback output device combination by a communication channel with the target playback output device or the target playback output device combination, so as to play, by the target playback output device or the target playback output device combination, the audio to be played back, continues to be executed.

This embodiment allows the user to manually change the target playback output device or the target playback output device combination, thereby providing greater convenience for the user and improving the user experience.

In an embodiment, before the interface of the playback output device distribution diagram is displayed, the method further includes: area information of two or more playback output devices in the multi-playback output system in a multi-playback output environment is acquired; and a playback output device distribution diagram is generated according to the area information.

In an embodiment, the area information may be the name of an area, such as the front left cabin, the front right cabin, the rear left cabin, the rear middle cabin, the rear right cabin, etc. in the smart cockpit as described above.

In an embodiment, the area in the multi-playback output environment includes at least one of: the front left cabin, the front right cabin, the rear left cabin, the rear middle cabin, and the rear right cabin.

In an embodiment, the area in the multi-playback output environment includes at least one of: a bedroom area, a kitchen area, a bathroom area, a living room area and a dining area.

In an embodiment, area information of two or more playback output devices in the multi-playback output system in the multi-playback output environment is acquired, includes: area information of areas where the playback output devices are located, reported by the playback output devices is received.

In an embodiment, the playback output devices may report area information of areas where they are located in an active manner or a passive manner.

In an embodiment, the active manner means that after establishing a communication channel with the mobile terminal, the playback output device actively reports area information of an area where the playback output device is located to the mobile terminal.

In an embodiment, the passive manner means that after a communication channel is established between the playback output device and the mobile terminal, the mobile terminal sends an area information acquisition request to the playback output device, and after receiving the area information acquisition request, the playback output device reports area information of an area where the playback output device is located.

In an embodiment, the playback output device may be a Bluetooth Low Energy audio (LE audio) loudspeaker, and then the communication channel between the mobile terminal and the playback output device is a Generic Attribute Profile (GATT) channel, and the mobile terminal and the playback output device communicate on the basis of an LE audio protocol.

In an embodiment, the communication channel between the playback output device and the mobile terminal may be a communication channel based on a connected state, and may also be a broadcast communication channel based on a non-connected state.

In an embodiment, the communication channel between the playback output device and the mobile terminal may be established in a near field communication manner. The near field communication manner may be, for example, Bluetooth.

In an embodiment, the playback output device distribution diagram is generated according to the area information, includes: a multi-playback output environment diagram is generated according to area shape features in the multi-playback output environment and a positional relationship between the areas; position information of the playback output devices in the multi-playback output environment diagram is determined according to the area information; and the playback output devices are added to the multi-playback output environment diagram according to the position information, so as to obtain the playback output device distribution diagram.

In an embodiment, after the target playback output device or the target playback output device combination in the multi-playback output system for playing the audio to be played back is determined according to the type of the audio to be played back, the method further includes: a correlation between application program information corresponding to the audio to be played back and area information of an area where the target playback output device or the target playback output device combination is located is stored.

In an embodiment, the correlation between application program information corresponding to the audio to be played back and area information of an area where the target playback output device or the target playback output device combination is located may be stored in a case that the area where the target playback output device or the target playback output device combination includes at least one preset target area, and the area where the target playback output device or the target playback output device combination is located does not include an area other than the preset target area. Also, the correlation between application program information corresponding to the audio to be played back and area information of an area where the target playback output device or the target playback output device combination is located may be stored in any case.

In this embodiment, the correlation is stored, that is, playback habits of the user are recorded, and playback is performed again on the basis of the playback habits of the user, and audio playback is performed on the basis user requirements, that is, is configured in a humanization manner, thereby improving the user experience.

According to the audio playback method provided in the embodiments of the present invention, the target playback output device or the target playback output device combination for playing the audio to be played back is determined on the basis of the type of the audio to be played back, and the audio to be played back is played back by the target playback output device or the target playback output device combination, thereby realizing detailed control of playback output devices in the multi-playback output system by the mobile terminal, and improving the user experience.

In order to more intuitively present an implementation process of the audio playback method according to the embodiments of the present invention, two examples are listed below for illustration, and the listed examples are not intended to limit the scope of protection of the embodiments of the present invention.

### Example 1

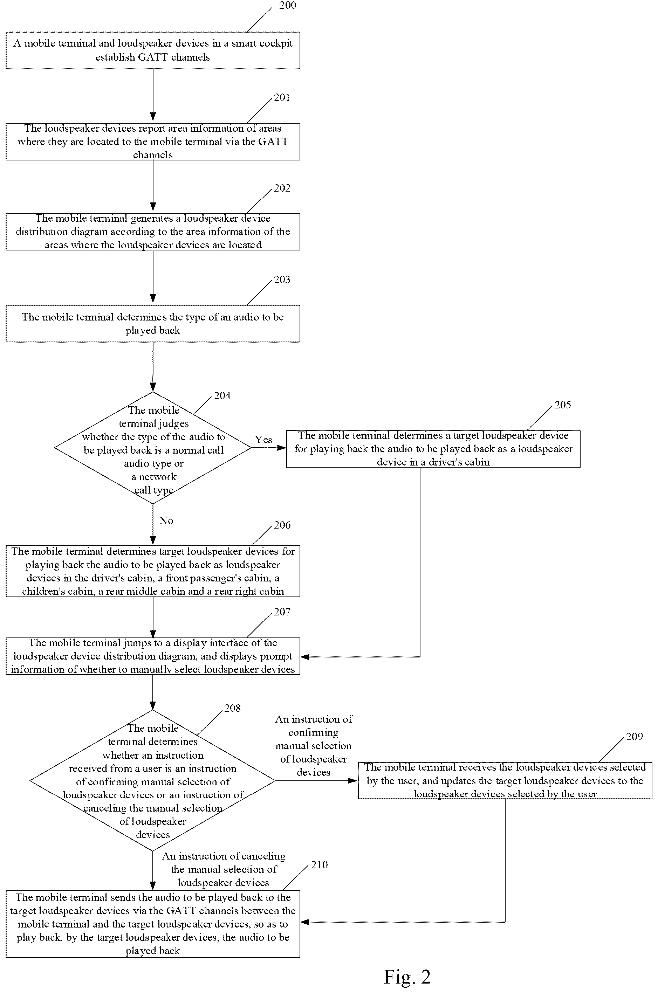

The present example describes a method in which a mobile terminal controls loudspeaker devices in a smart cockpit to perform audio playback. In the present example, an area where the mobile terminal is located being a driver's cabin is taken as an example for illustration. As shown in Fig. 2, the method includes:
Step 200. The mobile terminal and the loudspeaker devices in the smart cockpit establish GATT channels.
Step 201. The loudspeaker devices report area information of areas where they are located to the mobile terminal via the GATT channels.
Step 202. The mobile terminal generates a loudspeaker device distribution diagram according to the area information of the areas where the loudspeaker devices are located.
Step 203. The mobile terminal determines the type of an audio to be played back.
Step 204. The mobile terminal judges whether the type of the audio to be played back is a normal call audio type or a network call type; if so, step 205 is executed; and if not, step 206 is executed.
Step 205. The mobile terminal determines a target loudspeaker device for playing the audio to be played back as a loudspeaker device in the driver's cabin, and step 207 is executed.
Step 206. The mobile terminal determines target loudspeaker devices for playing the audio to be played back as loudspeaker devices in the driver's cabin, a front passenger's cabin, a children's cabin, a rear middle cabin and a rear right cabin, and step 207 is executed.
Step 207. The mobile terminal jumps to a display interface of the loudspeaker device distribution diagram, and displays prompt information of whether to manually select loudspeaker devices.
Step 208. The mobile terminal determines whether an instruction received from a user is an instruction of confirming manual selection of loudspeaker devices or an instruction of canceling the manual selection of loudspeaker devices, and in a case that the instruction is an instruction of confirming manual selection of loudspeaker devices, step 209 and step 210 are executed; and in a case that the instruction is an instruction of canceling the manual selection of loudspeaker devices, step 210 is executed.
Step 209. The mobile terminal receives the loudspeaker devices selected by the user, and updates the target loudspeaker devices to the loudspeaker devices selected by the user.
Step 210. The mobile terminal sends the audio to be played back to the target loudspeaker devices via the GATT channels between the mobile terminal and the target loudspeaker devices, so as to play, by the target loudspeaker devices, the audio to be played back.

### Example 2

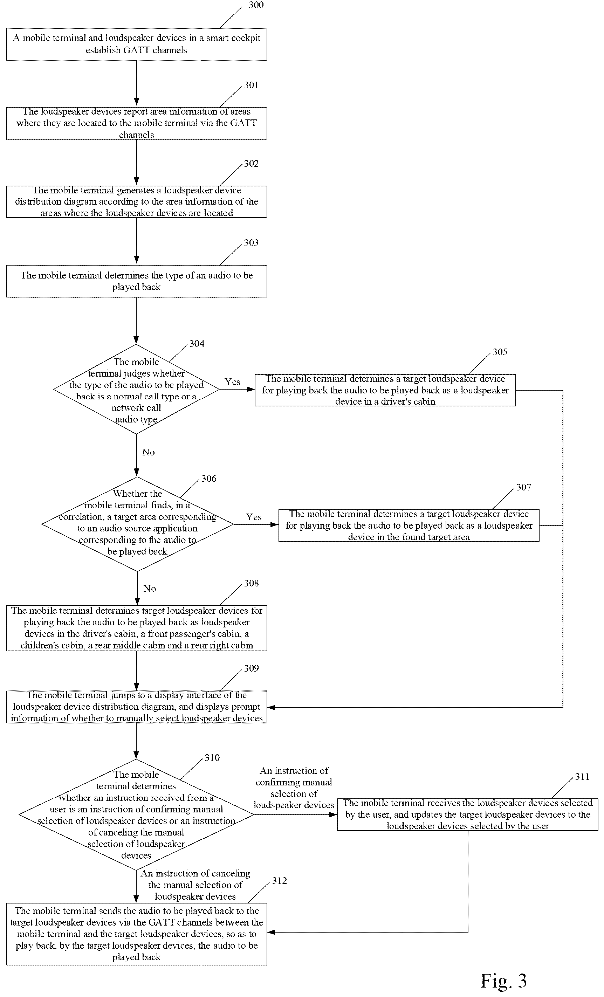

The present example describes an audio playback method on the basis of playback habits of a user. In the present example, an area where the mobile terminal is located being a driver's cabin is taken as an example for illustration. As shown in Fig. 3, the method includes:
Step 300. The mobile terminal and loudspeaker devices in the smart cockpit establish GATT channels.
Step 301. The loudspeaker devices report area information of areas where they are located to the mobile terminal via the GATT channels.
Step 302. The mobile terminal generates a loudspeaker device distribution diagram according to the area information of the areas where the loudspeaker devices are located.
Step 303. The mobile terminal determines the type of an audio to be played back.
Step 304. The mobile terminal judges whether the type of the audio to be played back is a normal call type or a network call audio type; if so, step 305 is executed; and if not, step 306 is executed.
Step 305. In a case that the mobile terminal determines a target loudspeaker device for playing the audio to be played back as a loudspeaker device in the driver's cabin, step 309 is executed.
Step 306. The mobile terminal searches, in a preset correlation between audio source applications and target areas, for a target area corresponding to an audio source application corresponding to the audio to be played back, and in a case that the target area corresponding to the audio source application corresponding to the audio to be played back is found, step 307 is executed; and in a case that the target area corresponding to the audio source application of the audio to be played back is not found, step 308 is executed.
Step 307. The mobile terminal determines a target loudspeaker device for playing the audio to be played back as a loudspeaker device in the found target area, and step 309 is executed.
Step 308. The mobile terminal determines target loudspeaker devices for playing the audio to be played back as loudspeaker devices in the driver's cabin, a front passenger's cabin, a children's cabin, a rear middle cabin and a rear right cabin, and step 309 is executed.
Step 309. The mobile terminal jumps to a display interface of the loudspeaker device distribution diagram, and displays prompt information of whether to manually select loudspeaker devices.
Step 310. The mobile terminal determines whether an instruction received from a user is an instruction of confirming manual selection of loudspeaker devices or an instruction of canceling the manual selection of loudspeaker devices, and in a case that the instruction is an instruction of confirming manual selection of loudspeaker devices, step 311 and step 312 are executed; and in a case that the instruction is an instruction of canceling the manual selection of loudspeaker devices, step 312 is executed.
Step 311. The mobile terminal receives the loudspeaker devices selected by the user, and updates the target loudspeaker devices to the loudspeaker devices selected by the user.
Step 312. The mobile terminal sends the audio to be played back to the target loudspeaker devices via the GATT channels between the mobile terminal and the target loudspeaker devices, so as to play, by the target loudspeaker devices, the audio to be played back.

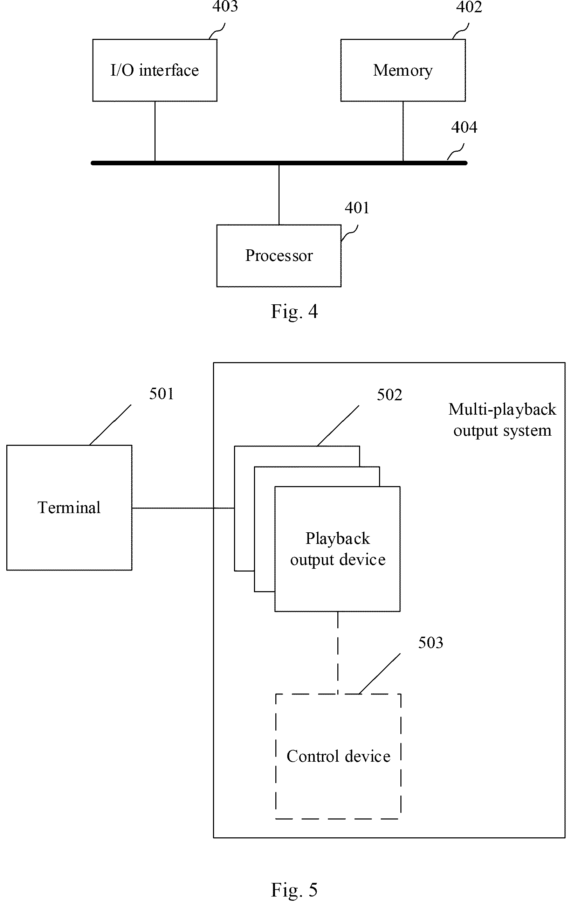

According to a second aspect, refer to Fig. 4, some other embodiments of the present invention provide an electronic device, including: at least one processor 401; and a memory 402, the memory 402 storing at least one program, which when executed by the at least one processor 401, implements any one of the audio playback method as described above.

In some exemplary embodiments, the electronic device further includes: one or more I/O interfaces 403, connected between the processor 401 and the memory 402, and configured to implement information interaction between the processor 401 and the memory 402.

The processor 401 is a device having data processing capability, and includes, but is not limited to, a central processing unit (CPU), and the like; the memory 402 is a device having data storage capability, and includes, but is not limited to, a random access memory (RAM, more specifically, SDRAM, DDR, etc.), a read-only memory (ROM), an electrically-erasable programmable read-only memory (EEPROM), and a flash memory (FLASH); and the I/O interfaces (read/write interfaces) 403 are connected between the processor 401 and the memory 402, and can implement information interaction between the processor 401 and the memory 402, and the I/O interfaces include, but are not limited to, a data bus (Bus), and the like.

In some embodiments, the processor 401, the memory 402, and the I/O interfaces 403 are interconnected by a bus 404, which in turn is connected to other components of a computing device.

According to a third aspect, some other embodiments of the present invention provide a computer readable medium, the computer readable medium storing a computer program, which when executed by a processor, implements any one of the audio playback method as described above.

Fig. 5 is a block diagram of composition of an audio playback system provided according to some other embodiments of the present invention.

In a fourth aspect, refer to Fig. 5, some other embodiments of the present invention provide an audio playback system, including: a terminal 501, configured to determine the type of an audio to be played back; to determine, according to the type of the audio to be played back, a target playback output device or a target playback output device combination in a multi-playback output system for playing the audio to be played back; and to send the audio to be played back to the target playback output device or the target playback output device combination by a communication channel between the terminal and the target playback output device or the target playback output device combination, so as to play, by the target playback output device or the target playback output device combination, the audio to be played back; and playback output devices 502 in the multi-playback output system, each of the playback output devices being configured to receive, by a communication channel between the playback output device and the terminal, the audio to be played back which is sent by the terminal, and to play the audio to be played back.

In an embodiment, the terminal 501 is specifically configured to implement the determination, according to the type of the audio to be played back, the target playback output device or the target playback output device combination in the multi-playback output system for playing the audio to be played back, by: determine the target playback output device or the target playback output device combination according to the type of the audio to be played back and at least one of: a pre-stored correlation between application program information and area information; the current state of a mobile terminal; and an area where the mobile terminal is located.

In an embodiment, the terminal 501 is specifically configured to implement the determination, according to the type of the audio to be played back, the target playback output device or the target playback output device combination in the multi-playback output system for playing the audio to be played back, by: determining the target playback output device or the target playback output device combination according to the type of the audio to be played back and a pre-stored correlation between application program information and area information where a playback output device or a playback output device combination is located.

In an embodiment, the terminal 501 is specifically configured to implement the determination, according to the type of the audio to be played back, the target playback output device or the target playback output device combination in the multi-playback output system for playing the audio to be played back, by: determining the target playback output device or the target playback output device combination according to the type of the audio to be played back and a current state of a terminal for playing the audio to be played back.

In an embodiment, the terminal 501 is specifically configured to implement the determination, according to the type of the audio to be played back, the target playback output device or the target playback output device combination in the multi-playback output system for playing the audio to be played back, by: determining the target playback output device or the target playback output device combination according to the type of the audio to be played back, a pre-stored correlation between application program information and area information where a playback output device or a playback output device combination is located, and a current state of a terminal for playing the audio to be played back and an area where the terminal is located.

In an embodiment, the terminal 501 is specifically configured to implement the determination, according to the type of the audio to be played back, the target playback output device or the target playback output device combination in the multi-playback output system for playing the audio to be played back, by: determining the target playback output device or the target playback output device combination according to the audio type of the audio to be played back and an area where a terminal for playing the audio to be played back is located.

In an embodiment, the terminal 501 is specifically configured to implement the determination, according to the type of the audio to be played back, the target playback output device or the target playback output device combination in the multi-playback output system for playing the audio to be played back, by: determining the target playback output device or the target playback output device combination according to the audio type of the audio to be played back, a current state of a terminal for playing the audio to be played back, and an area where the terminal is located.

In an embodiment, the terminal 501 is further configured to: display an interface of a playback output device distribution diagram, and provide an option of selecting a playback output device or a playback output device combination; and perform audio playback according to the playback output device or the playback output device combination selected by the user.

In an embodiment, the terminal 501 is further configured to: acquire area information of two or more playback output devices in the multi-playback output system in a multi-playback output environment; and generate a playback output device distribution diagram according to the area information.

In an embodiment, the terminal 501 is further configured to: store a correlation between application program information corresponding to the audio to be played back and area information of an area where the target playback output device or the target playback output device combination is located.

In an embodiment, the audio playback system further includes: a control device 503 in the multi-playback output system, the control device being configured to display the playback output device distribution diagram; and to display the states of loudspeaker devices in the playback output device distribution diagram.

In an embodiment, the audio playback system further includes: a control device 503 in the multi-playback output system, the control device being configured to determine a playback output device in an idle state, and to play an audio or network music of a built-in player or a playback application via the playback output device in an idle state; or to receive voice information, and to perform voice recognition on the basis of the voice information to obtain a corresponding control instruction.

In an embodiment, the playback output device in an idle state refers to a playback output device that is not occupied by an audio stream.

The specific implementation process of the audio playback system is the same as the specific implementation process of the audio playback method in the embodiments as described above, and will not be repeated herein.

A person of ordinary skill in the art could understand that the functional modules/units in all or some of the steps, systems and apparatuses of the methods disclosed above can be implemented as software, firmware, hardware, and any suitable combination thereof. In a hardware embodiment, the division of functional modules/units mentioned in the description above does not necessarily correspond to the division of physical assemblies; for example, one physical assembly may have multiple functions, or one function or step may be performed cooperatively by several physical assemblies. Some or all of the physical assemblies may be implemented as software executed by a processor, such as a central processing unit, a digital signal processor, or a microprocessor, or implemented as hardware, or implemented as an integrated circuit, such as an application specific integrated circuit. Such software may be distributed on a computer readable medium which may include a computer storage medium (or non-transitory medium) and a communication medium (or transitory medium). As is well known to a person of ordinary skill in the art, the term "computer storage medium" includes transitory and non-transitory, removable and non-removable medium implemented in any method or technology for storing information (such as computer readable instructions, data structures, program modules, or other data). The computer storage medium includes but is not limited to, RAM, ROM, EEPROM, flash memory or other memory technology, CD-ROM, digital versatile disk (DVD) or other optical disk storage, magnetic cassettes, magnetic tapes, magnetic disk storage or other magnetic storage, or any other medium which can be used to store desired information and can be accessed by a computer. In addition, as is well known to a person of ordinary skill in the art, the communication medium typically includes computer readable instructions, data structures, program modules, or other data in a modulated data signal such as a carrier or other transmission mechanisms, and may include any information delivery medium.

Exemplary embodiments have been disclosed herein, and while specific terms are employed, they are used and should be interpreted in a generic and descriptive sense only, and not for purpose of limitation. In some instances, as would be obvious to a person skilled in the art, features, characteristics, and/or elements described in connection with a particular embodiment may be used singly or in combination with features, characteristics, and/or elements described in connection with other embodiments, unless specifically indicated otherwise. Thus, it will be understood by a person skilled in the art that various changes in form and details may be made without departing from the scope of the present invention as set forth in the appended claims.

## Claims

1. An audio playback method, the method comprising:
determining a type of an audio to be played back; and
determining a target playback output device or a target playback output device combination in a multi-playback output system for playing the audio to be played back, according to the type of the audio to be played back.

2. The audio playback method according to claim 1, wherein determining a target playback output device or a target playback output device combination in a multi-playback output system for playing the audio to be played back, according to the type of the audio to be played back, comprises:
determining the target playback output device or the target playback output device combination according to the type of the audio to be played back and a pre-stored correlation between application program information and area information where a playback output device or a playback output device combination is located.

3. The audio playback method according to claim 1, wherein determining a target playback output device or a target playback output device combination in a multi-playback output system for playing the audio to be played back, according to the type of the audio to be played back, comprises:
determining the target playback output device or the target playback output device combination according to the type of the audio to be played back and a current state of a terminal for playing the audio to be played back.

4. The audio playback method according to claim 1, wherein determining a target playback output device or a target playback output device combination in a multi-playback output system for playing the audio to be played back, according to the type of the audio to be played back, comprises:
determining the target playback output device or the target playback output device combination according to the type of the audio to be played back, a pre-stored correlation between application program information and area information where a playback output device or a playback output device combination is located, and a current state of a terminal for playing the audio to be played back and an area where the terminal is located.

5. The audio playback method according to claim 1, wherein determining a target playback output device or a target playback output device combination in a multi-playback output system for playing the audio to be played back, according to the type of the audio to be played back, comprises:
determining the target playback output device or the target playback output device combination according to the audio type of the audio to be played back and an area where a terminal for playing the audio to be played back is located.

6. The audio playback method according to claim 1, wherein determining a target playback output device or a target playback output device combination in a multi-playback output system for playing the audio to be played back, according to the type of the audio to be played back, comprises:
determining the target playback output device or the target playback output device combination according to the audio type of the audio to be played back, a current state of a terminal for playing the audio to be played back, and an area where the terminal is located.

7. The audio playback method according to any one of claims 1-6, wherein the method further comprises:
displaying an interface of a playback output device distribution diagram, and providing an option of selecting a playback output device or a playback output device combination; and
performing the audio playback according to the playback output device or the playback output device combination selected by a user.

8. The audio playback method according to claim 7, wherein before displaying the interface of the playback output device distribution diagram, the method further comprises:
acquiring area information of two or more playback output devices in the multi-playback output system in a multi-playback output environment; and
generating the playback output device distribution diagram according to the area information.

9. The audio playback method according to any one of claims 1-6, wherein after determining a target playback output device or a target playback output device combination in a multi-playback output system for playing the audio to be played back, according to the type of the audio to be played back, the method further comprises:
storing a correlation between application program information corresponding to the audio to be played back and area information of an area where the target playback output device or the target playback output device combination is located.

10. An electronic device, comprising:
at least one processor; and
a memory, the memory storing at least one program, which when executed by the at least one processor, implements the audio playback method according to any one of claims 1-9.

11. A computer readable medium, the computer-readable medium storing a computer program, which when executed by a processor, implements the audio playback method according to any one of claims 1-9.

12. An audio playback system, comprising:
a terminal, configured to determine the type of an audio to be played back; to determine, according to the type of the audio to be played back, a target playback output device or a target playback output device combination in a multi-playback output system for playing the audio to be played back; and to send the audio to be played back to the target playback output device or the target playback output device combination by a communication channel between the terminal and the target playback output device or the target playback output device combination, so as to play, by the target playback output device or the target playback output device combination, the audio to be played back; and
a playback output device in the multi-playback output system, the playback output device being configured to receive, by a communication channel between the playback output device and the terminal, the audio to be played back which is sent by the terminal, and to play the audio to be played back.
